Europäisches Patentamt

European Patent Office

Office européen des brevets

(11) Publication number: **0 138 574**
**B1**

(12) **EUROPEAN PATENT SPECIFICATION**

(45) Date of publication of patent specification: **10.10.90**

(21) Application number: **84306920.4**

(22) Date of filing: **10.10.84**

(51) Int. Cl.⁵: **F 24 J 2/50, F 24 J 2/42**

(54) **Light transmissive insulation apparatus.**

(30) Priority: **12.10.83 US 541119**

(43) Date of publication of application:
**24.04.85 Bulletin 85/17**

(45) Publication of the grant of the patent:
**10.10.90 Bulletin 90/41**

(84) Designated Contracting States:
**AT BE CH DE FR GB IT LI LU NL SE**

(56) References cited:
**CH-A- 580 734**
**FR-A-1 601 101**
**FR-A-2 327 501**
**GB-A-2 109 105**
**US-A-3 825 641**
**US-A-4 470 403**

(73) Proprietor: **Klier, Shimon**
**Simtat Magal 4**
**Savyon (IL)**

(72) Inventor: **Klier, Shimon**
**Simtat Magal 4**
**Savyon (IL)**
Inventor: **Novik, Ofer**
**Weizmann 30**
**Rehovot (IL)**

(74) Representative: **Higgins, Michael Roger et al**
**MARKS & CLERK 57/60 Lincoln's Inn Fields**
**London WC2A 3LS (GB)**

Courier Press, Leamington Spa, England.

**Description**

The present invention relates to insulation generally and more particularly to insulation apparatus and structures which are substantially light transmissive and are suitable for use with solar ponds including defined portions of larger bodies such as lakes or seas.

The problem of insulation is a concern of increasing importance throughout the world in view of the current energy crisis. Of particular interest is the problem of providing thermal insulation which does not interfere with the passage of radiation, such as light and heat in one direction.

One practical example of a system which requires insulation for enhanced efficiency is the solar pond which is described in the following reference: H. Weinberger, The Physics of the Solar Pond, Solar Energy, Volume 8, page 45 (1964). In order to lower the significant heat losses to the atmosphere at the surface of the pond, it is considered desirable to provide some sort of stable air layer between the pond surface and the atmosphere. The construction of such an air gap over a relatively large area does not appear to be feasible due to the difficulty of providing and maintaining in place over the pond a cover which is transmissive to solar radiation. U.S. Patent 4,091,800 describes a solar pond construction which inter alia may comprise a foam formed of a sudsing agent as in firefighting foams disposed on the top surface thereof. No technique for retaining the foam in place is disclosed or suggested.

A great variety of solar collectors are known both in the patent literature and in the marketplace. A common goal of these solar collectors is the provision of a collector surface having relatively high absorptivity and low emissivity. Selective coatings have been developed for this purpose and are widely used.

It has also been proposed to provide a transparent insulative layer to bodies of water for solar radiation heating thereof preventing heat losses therefrom through evaporation and convection. Examples of proposed constructions of such an insulative layer appear in the following U.S. Patents: 4,091,800; 4,016,015; 4,121,567; 4,137,612; 4,106,905; 3,072,920; 4,195,622; 3,949,095; 4,222,366; and 4,256,087.

None of the above patents describes a transparent insulative layer which is characterized by transmissivity to solar infra-red radiation and substantial opacity to thermal infra-red radiation to a degree which enables economic utilization of solar energy at elevated temperatures.

There is also known a light transmissive insulative material named KAPILUX, manufactured by Kapillar-Technik GmbH of West Germany. This material comprises an array of capillary sized tubes which are used to permit light transmission therethrough but provide substantial thermal insulation including, according to the catalog of the manufacturer, absorption of 75% of solar infra-red radiation. This high level of absorption of solar infra-red radiation makes the material particularly suitable for use in applications where light but not thermal inputs are desired, such as factory roofs in hot climates. This feature, however, renders the material unsuitable for use in a solar energy utilization application since it does not permit passage of most of the thermal solar radiation.

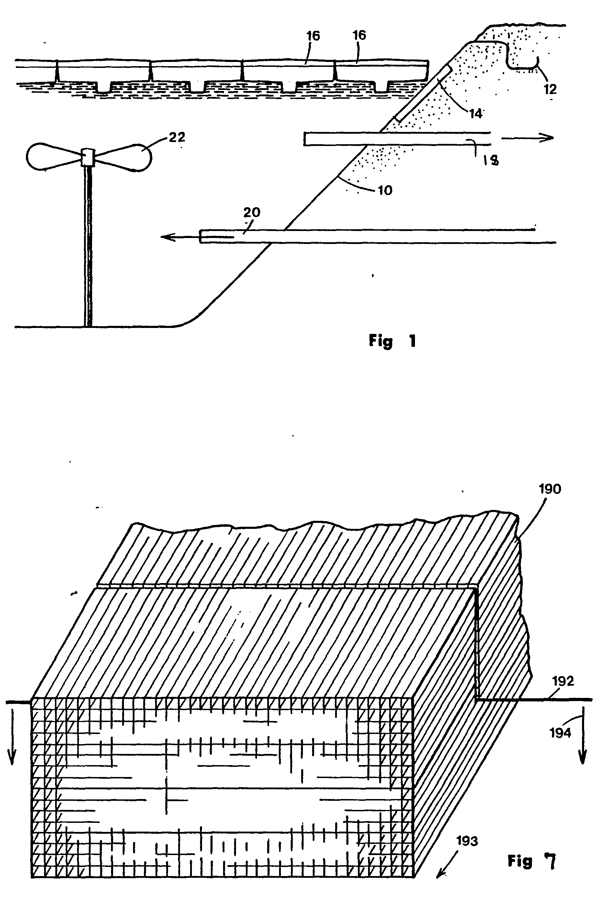

French Patent No. 2,327,501 discloses different cellular structures for use in solar collectors. The cellular structures, as shown in Figs. 1A and 1B of the patent are intended for use as an insulating layer which nonetheless transmits energy, such as solar energy, in one direction to a substrate. There is, however, no description of a structure wherein an air gap is defined between the cellular structure and the substrate, nor is there description of an application in conjunction with a solar pond.

Disclosed in British Patent No. 2,109,105 is a method and system for heating a body of water by provision thereon of a plurality of sealed resilient bags floating on the surface of the body of water. When taken together, the bags constitute a highly flexible cellular body which floats directly on the water surface.

The present invention seeks to provide an insulation system which prevents molecular diffusion therethrough and which provides extremely low transmissivity to infra-red back radiation in the wave-length range of 6-20 microns.

Further in accordance with an embodiment of the present invention, the insulation system is arranged to float on a body of liquid which it is sought to heat by solar radiation passing therethrough.

There is provided in accordance with the present invention a solar radiation transmissive insulation apparatus being generally transparent to solar infra-red radiation and solar visible radiation and generally opaque to thermal infra-red radiation and comprising an array of adjacent cells having an elongate geometrical configuration which limits free convection therethrough.

The solar radiation transmissive insulation apparatus finds particular application in placement over a solar pond containing a body of liquid sought to be heated, and also comprises a raft assembly adapted to float on the pond and includes a lower base wall which is generally transparent to solar visible and infrared radiation and generally opaque to thermal infrared radiation. The array of cells is formed to terminate in a common lower face and is arranged in the raft assembly in such a manner that the common face is spaced above the base wall so as to locate an air gap between the array and the base wall.

Further in accordance with a preferred embodiment of the invention, the array of cells is arranged in a plane. Additionally in accordance with an embodiment of the present invention, the planar array is arranged along the plane tangent to the earth's surface, thus enabling maximum radiation penetration of both direct and diffused light from the illuminating hemisphere.

Additionally in accordance with an embodiment of the invention, there is provided a solar pond comprising a body of liquid sought to be heated having its surface covered with at least one solar radiation transmissive insulation apparatus, the insulation apparatus comprising an array of adjacent cells having an elongate geometrical configuration which limits free convection therethrough thereby to minimize heat losses from the body of liquid through convection and conduction. the array being generally transparent to solar visible and infrared radiation and generally opaque to thermal infrared radiation.

The insulation apparatus also comprises a raft assembly adapted to be supported on the surface of the body of liquid and includes a lower base wall generally parallel to the surface of the body of liquid which is generally transparent to solar visible and infrared radiation and generally opaque to thermal infrared radiation, and the array of cells is formed to terminate in a common lower face and is arranged in the raft assembly in such a manner that the common face is spaced above the base wall so as to locate an air gap between the array and the base wall.

Further in accordance with an embodiment of the present invention, the aspect ratio between the characteristic hydrodynamic cross sectional diameter of the cells and their length or height is between 5 and 50.

Additionally in accordance with an embodiment of the present invention, the array of cells is defined by inner and outer planar surfaces, corresponding respectively to the sun facing and pond facing surfaces, which sealingly engage a plurality of upstanding surfaces which extend perpendicularly to the inner and outer planar surfaces. The upstanding surfaces are arranged to define a plurality of sealed separate cells. Preferably the maximum cross sectional dimension of the cell in a plane parallel to the planes of the inner and outer planar surfaces is no more than about 6 mm.

Further in accordance with an embodiment of the present invention, the upstanding surfaces are formed with a smooth finish and low inherent haze so as to provide low "apparent reflectivity" due to multiple reflectivity from the upstanding surfaces. In accordance with an embodiment of the invention, the smooth finish of the upstanding surfaces may be maintained by providing a low vapor pressure condensible liquid within each cell which undergoes reflux condensation therein and provides a protective coating to the upstanding surfaces.

Additionally in accordance with an embodiment of the present invention, the lower planar surface is a transparent surface.

Various different configurations of cell arrays may be employed. Examples are arrays of cylindrical members which may have any suitable cross sectional geometry such as rectangular, triangular or hexagonal, arrays defined by adjacent corrugated elements and planar elements and arrays defined by sheets pressed to have an egg carton type configuration.

The present invention will be more fully understood and appreciated from the following detailed description taken in conjunction with the drawings in which:

Fig. 1 is a sectional illustration of a solar pond covered with insulative rafts constructed and operative in accordance with an alternative embodiment of the present invention;

Fig. 2 is a pictorial illustration of solar radiation transmissive thermal insulation material constructed and operative in accordance with a preferred embodiment of the present invention;

Figs. 3 and 4 are sectional illustrations of two alternative embodiments of solar radiation transmissive thermal insulation material constructed and operative in accordance with a preferred embodiment of the present invention;

Figs. 5A, 5B, 5C are respective plan, sectional and side view illustrations of solar radiation transmissive thermal insulation material constructed and operative in accordance with an alternative embodiment of the present invention;

Fig. 6 is a side view, sectional illustration of a raft enclosure useful in the embodiment of Fig. 1; and

Fig. 7 is a pictorial illustration of the insulative material used in the embodiment of Figs. 7 and 8 and illustrating a portion of the technique for manufacturing same.

Reference is now made to Fig. 1 which illustrates a solar pond constructed and operative in accordance with a preferred embodiment of the present invention. The solar pond comprises a pond liner 10 which encloses the pond from the bottom and sides and is peripherally anchored in the surrounding earth by an anchor 12. A peripheral thermal insulating side surface layer 14 is provided adjacent the top surface of the pond as illustrated.

The solar pond comprises typically non-saline water and its surface is covered with an array of modular insulating raft assemblies 16, the construction of which will be described in detail hereinafter. It is a particular feature of the present invention that the pond can employ any type of water or other fluid. A heated water outlet conduit 18 communicates with the interior of the pond near its top surface for removing heated water therefrom for external use. A return water supply conduit 20 typically communicates with the interior of the pond at a slightly lower level.

According to a preferred embodiment of the present invention, mixer means 22, typically in the form of one or more rotating impellers or suitably directed water jets, are provided in the pond for providing a generally homogeneous temperature layer of water at high temperature adjacent the surface of the pond. This layer is relatively stable against heat losses due to convection from adjacent layers of water lying therebelow.

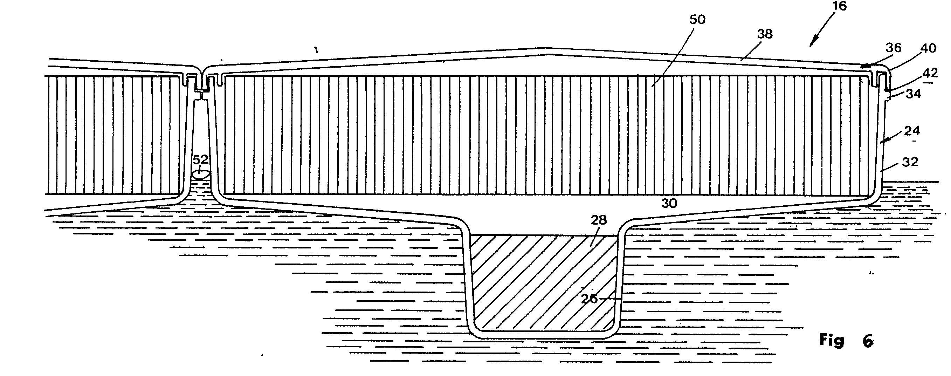

Reference is now made to Fig. 6 which illustrates the construction of raft assemblies 16. Raft assemblies 16 comprise a molded bottom assembly 24, which is typically formed of G.M.T., continuous glass fibre reinforced plastic such as Polypropylene, and has a generally rectangular configuration. The bottom assembly typically includes a bottom recess 26 which accommodates a weight 28 for providing raft stabilization. Extending upwardly and outwardly of the bottom recess is an inclined bottom wall 30 which terminates in peripheral side walls 32. Formed on side walls 32 is a peripheral lid support protrusion 34. It is noted that the bottom assembly, when fully assembled as part of the raft is designed to ride in the water such that the water line is located approximately at the bottom of the side walls 32, such that the insulating material located within the bottom assembly lies substantially above the water surface.

A lid member 36 is assembled onto the side walls 32 of the bottom assembly. The lid member 36 is formed with an inclined top surface 38 to provide drainage of rainwater and with a peripheral engagement clip configuration 40 which provides positive sealed engagement with the top of side walls 32 of the bottom assembly. The positive sealed engagement may be provided by a labyrinth seal configuration molded into the peripheral walls defining clip configuration 40 and/or into side walls 32. A bottom surface 42 is arranged to abut against protrusions 34 of side walls 32.

The lid member 36 is preferably formed of PMMA (PolyMethylMethacrylate), UV protected polycarbonate or glass by injection molding or thermoforming, or any other suitable technique. It is preferably characterized in that it is transparent to radiation in the solar spectrum. Preferably it has a low refractive index or is surface treated by conventional techniques to reduce reflectivity. It is preferably opaque to thermal infrared radiation and displays high durability when exposed to sunlight and humidity.

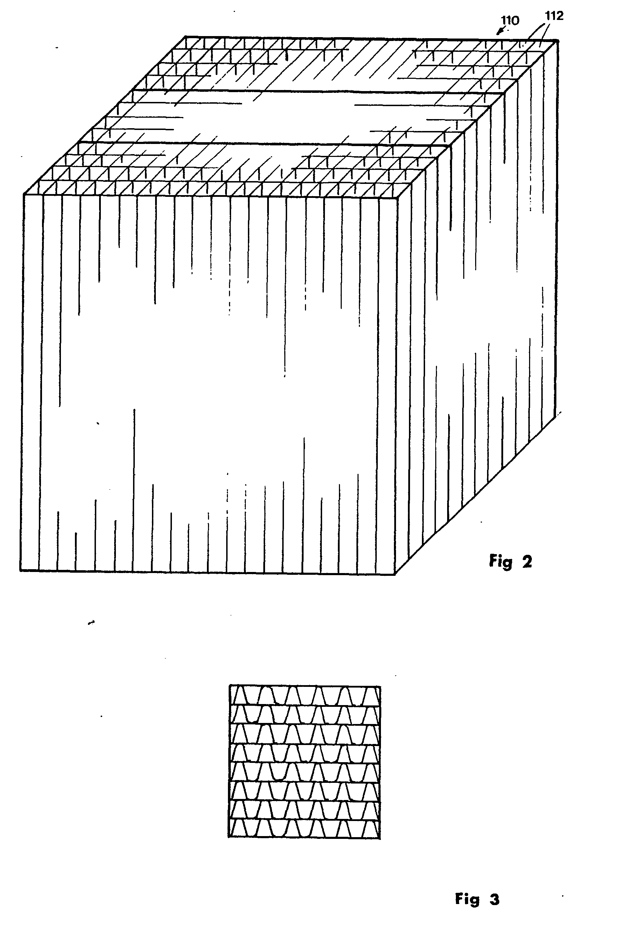

As seen in Fig. 6, each of adjacent raft assemblies 16, contains insulation apparatus 50 of the type illustrated typically in Fig. 2 and described hereinbelow. A layer of a refluxing fluid, such as low molecular weight silicone oil may be provided within the sealed enclosures defined by raft assemblies 16, for coating the surfaces of the raft assemblies and of the insulating apparatus by refluxing to prevent surface deterioration of the surfaces which results in haze and consequent energy losses.

A layer 52 of oil, such as ordinary light machine oil is located intermediate adjacent rafts and not therebeneath, in order to prevent evaporation at the interstices between adjacent rafts.

Reference is now made to Fig. 2 which illustrates a solar energy transmissive thermal insulation material constructed and operative in accordance with a preferred embodiment of the present invention. The overall characteristics of the material are as follows:

1. Minimal absorption (i.e. less than about 20%) in the range of solar radiation, i.e. from approximately 0.3 to 2.0 microns.

2. High absorption (i.e. at least about 80%) in the range of thermal infra-red radiation, i.e. between approximately 6 to 25 microns.

3. Minimal reflectivity (i.e. less than approximately 20%) to incident diffuse radiation within the solar spectrum.

4. Low thermal convection and conduction heat losses (in the range of approximately 0.1-0.2 Watt/meter degree Centigrade or less).

According to a preferred embodiment of the present invention, the solar radiation transmissive thermal insulation material comprises an array 110 of cells 112 having a geometrical configuration which is selected to minimize both convection and conduction thermal losses. Within the context of a cell having a uniform cross sectional configuration, the geometrical configuration which minimizes conduction and convection may be appreciated to have an aspect ratio which is maximized against a cross sectional circumference which is minimized. The aspect ratio is defined as the ratio between the length (height) of the cell and its characteristic hydrodynamic cross sectional diameter. This characteristic hydrodynamic cross sectional diameter is a well known defined quantity for all common types of geometrical cross sectional shapes, such as squares, triangles, etc. and is equal to 4 (area)/circumference.

According to a preferred embodiment of the present invention, cross sectional configurations having a high ratio of area to maximum separation between adjacent side walls are employed. Thus circular, hexagonal, triangular and square cross sectional configurations are preferred over rectangular and other configurations, even though such configurations may be used nevertheless for reasons related to ease and economy of manufacture.

According to a preferred embodiment of the present invention, an aspect ratio of between 5 and 50 is preferred. The maximum separation between adjacent side walls is selected to minimize free convection through the cell under the temperature gradient conditions encountered during operation. The relationship between temperature gradient and the desired maximum separation between adjacent side walls for substantial prevention of free convection is described in Heat Transmission, by Walter N. McAdams, 3rd edition, McGraw Hill Book Company, at pages 170-182, especially pages 181-182.

In the present invention, the operational temperature gradients particularly for solar pond applications are expected to be in the range of 2-15 degrees centigrade/cm and thus the maximum separation between side walls of the cells is selected to be about 1 cm or less in order to limit the free convection losses to less than 1 Watt/square meter degree Centigrade.

It is appreciated that there exists a certain trade off in the determination of the thickness of the side walls of the cells 112 since the greater the wall thickness, the greater is the absorption of thermal infra-red radiation and the smaller the wall thickness, the smaller is the thermal conduction produced by the side walls. Accordingly, the thickness of the side walls is determined in order to minimize the overall energy losses due to back radiation in the thermal infra-red range and conduction through the cell walls. In the illustrated embodiment, a side wall thickness of approximately 10-50 microns is preferred on the basis of projections made by the inventors herein.

In the illustrated embodiment of the present invention, polycarbonate plastic is currently considered to be the best available material from a cost effectiveness standpoint. It is appreciated that other types of plastic materials such as polymethacrylates (perspex), thermoplastic polyesters, fluorocarbons (PVF, FEP, etc) in combination with appropriate additives, and polyacrylate or glass may also be used.

It is appreciated that the provision of a particularly smooth side wall surface for the cells is particularly important to maintain their solar radiation transmission efficiency. Since it is known that plastic surfaces tend to dry out over time as the result of prolonged exposure to intensive solar radiation and their surface tends to become cloudy, it is proposed to provide a small quantity of a liquid within each cell. The liquid undergoes a continuous cycle of evaporation and condensation along the vertical temperature gradient and thus coats the side walls of the cells with a liquid coating preventing clouding thereof.

Fig. 3 illustrates a configuration of a cell array which is believed to be particularly easy and convenient to manufacture. Fig 3 is a top sectional view and indicates that the individual cells are defined by the junctions between alternating flat and corrugated layers of plastic which are joined at their junctions to define the individual cells.

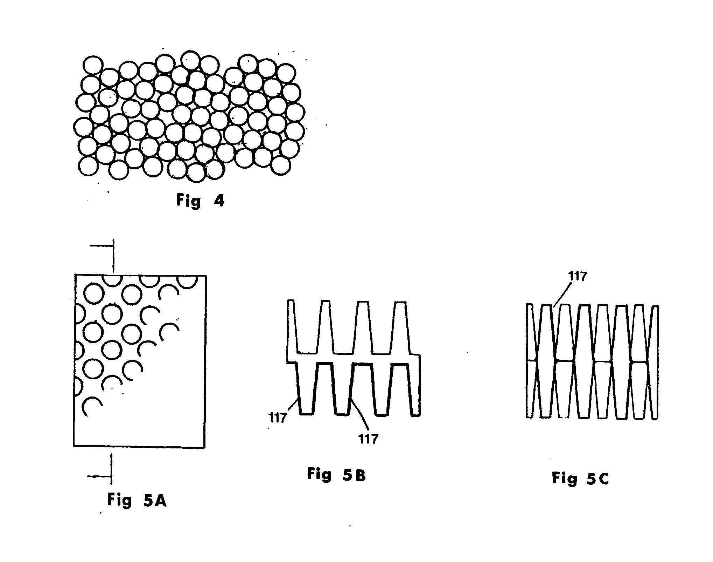

Fig. 4 illustrates an alternative configuration of a cell array which is made up of a multiplicity of tubes joined together in parallel orientation to define individual cells.

Figs. 5A, 5B and 5C illustrate a further alternative configuration of a cell array which is comprised of a pair of nested surfaces of egg carton type configuration, each of which defines an array of spaced finger portions 117 which define the cells. The finger portions 117 of one such surface facing in a first direction are interdigitated with the finger portions 117 of a second such surface facing in an opposite direction, whereby the finger portions 117 of one surface lie in the interstices between the finger portions 117 of the other surface.

Reference is now made to Fig. 7 which illustrates a technique for manufacture of the insulation apparatus of Fig. 2. As a first step, a multiple sheet hollow profile 190 is produced by extrusion from polycarbonate or other suitable material and cut into long slabs.

The slabs are then stacked and slightly pressed together to ensure contact between walls of adjacent slabs. A hot, thin metal wire 192, or series of such wires, is then driven through the stacked profiles in a direction 194 perpendicular to the direction 193 of extrusion and is operative to melt the plastic material at the contact surface with the following effects:

a. cutting through the stacks longitudinally along axis 194.

b. welding the adjacent edges of adjacent slabs together.

The cutting and welding steps may alternatively be performed by a suitable laser beam.

The result is a slice formed of a plurality of joined slabs, which slice is located within the sealed raft as described hereinabove.

The basic characteristics of the assembled raft assembly including the insulation apparatus are as follows:

Thermal stability up to about 100 degrees centigrade.

Mechanical and dimensional stability against accumulative shearing forces caused by wind up to 40 m/sec at 100 m fetch, being the length of an open stretch of water across which the wind blows.

Floating stability notwithstanding waves, inhibition of wave their formation.

Extremely low transmissivity of water vapor by diffusion in order to avoid interior accumulation of water by condensation.

The optical and other characteristics already described hereinabove in connection with the description of the insulation material.

## Claims

1. Solar radiation transmissive insulation apparatus (16) for a solar pond containing a body of liquid sought to be heated, said insulation apparatus comprising an array (50) of cells, each having an elongate geometrical configuration which limits free convection therethrough, said array being generally transparent to solar visible and infrared radiation and generally opaque to thermal infrared radiation, characterized in that said insulation apparatus also comprises a raft assembly adapted to float on the body of liquid and comprising a lower base wall (30) which is generally transparent to solar visible and infrared radiation and generally opaque to thermal infrared radiation, and said array of cells is formed to terminate in a common lower face and is arranged in said raft assembly in such a manner that said common lower face is spaced above said base wall so as to locate an air gap between said array and said base wall.

2. Solar radiation transmissive insulation apparatus (16) according to claim 1, characterized in that said elongate cells extend generally perpendicular to said base wall.

3. Solar radiation transmissive insulation apparatus according to either of claims 1 or 2, and wherein said array is arranged in a plane.

4. Solar radiation transmissive insulation apparatus according to claim 3, and wherein said array is arranged in a plane parallel to the tangent to the earth's surface at its location.

5. A solar pond comprising:

a body of liquid sought to be heated having its surface covered with at least one solar radiation transmissive insulation apparatus (16), said insulation apparatus comprising an array (50) of cells, each having an elongate geometrical configuration which limits free convection therethrough thereby to minimize heat losses from the body of liquid through convection and conduction, said array being generally transparent to solar visible and infrared radiation and generally opaque to thermal infrared radiation, characterized in that said insulation apparatus also comprises a raft assembly adapted to float on the body of liquid and comprising a lower base wall (30) which is generally transparent to solar visible and infrared radiation and generally opaque to thermal infrared radiation, and said array of cells is formed to terminate in a common lower face and is arranged in said raft assembly in such a manner that said common lower face is spaced above said base wall so as to locate an air gap between said array and said base wall.

6. A solar pond according to claim 5, characterized in that said elongate cells extend generally perpendicular to said base wall.

7. Apparatus or solar pond according to any of claims 1, 2, 5 or 6, and wherein each of the cells in said array of cells has a uniform cross section and an aspect ratio which is selected to minimize free convention therethrough.

8. A solar pond according to either of claims 5 or 6, and wherein said array of cells comprises a planar array.

9. Apparatus or solar pond according to claim 7, and wherein said aspect ratio is between approximately 5 and approximately 50.

10. Apparatus or solar pond according to any of claims 1, 2, 5 or 6, and wherein said array of cells is defined by inner and outer planar surfaces and a plurality of upstanding surfaces extending perpendicularly to said inner and outer surfaces and defining side walls of the cells of said array of cells.

11. Apparatus or solar pond according to claim 10, and wherein said upstanding surfaces are joined to define a plurality of separate sealed cells.

12. Apparatus or solar pond according to any of claims 1, 2, 5, or 6, and wherein the cells of said array of cells are configured to have a cross-sectional shape selected form the groups comprising squares, circles and triangles.

13. Apparatus or solar pond according to any of claims 1, 2, 5, or 6, and wherein the cells of said array of cells are configured to have a maximum cross-sectional dimension of about 6 mm.

14. Apparatus or solar pond according to any of claims 1, 2, 5, or 6, and also comprising a liquid disposed in each of said array of cells, said liquid being operative to evaporate and condense in response to thermal gradients present within each cell so as to provide a liquid coating to the walls of said cell for preservation of a smooth surface finish thereon.

15. Apparatus or solar pond according to claim 10, wherein said inner surface is generally solar radiation transmissive.

16. A method for producing light transmissive thermal insulation comprising the steps of:

extruding a thin walled profile defining a plurality of parallel channels;

arranging a plurality of said thin walled profiles in side by side arrangement; and

causing a heated element to engage said plurality of thin walled profiles along a travel axis perpendicular to the extrusion axis, thereby cutting the profiles to a desired length and simultaneously thermally welding them to each other.

**Patentansprüche**

1. Sonnenstrahlung übertragende Isolationsvorrichtung (16) für einen Solarteich, der eine Menge einer Flüssigkeit enthält, die aufgeheizt werden soll, wobei die Isolationsvorrichtung ein Feld (50) von Zellen umfaßt, von denen jede eine längliche geometrische Konfiguration aufweist, welche die freie Konvektion dadurch begrenzt, und das Feld im wesentlichen transparent für sichtbare und infrarote Sonnenstrahlung und im wesentlichen undurchlässig für thermische Infrarotstrahlung ist, dadurch gekennzeichnet, daß die Isolationsvorrichtung eine Floßanordnung umfaßt, die dazu vorgesehen ist, um auf der Menge der Flüssigkeit zu schwimmen und eine untere Basiswand (30) aufweist, welche im wesentlichen durchlässig für sichtbare und infrarote Sonnenstrahlung und im wesentlichen undurchlässig für thermische Infrarotstrahlung ist, und wobei das Feld von Zellen gebildet ist, um auf in einer gemeinsamen unteren Stirnfläche zu enden, und in der Floßanordnung in solch einer Weise angeordnet ist, daß die gemeinsame untere Stirnfläche im Abstand über der Basiswand angeordnet ist, um so einen Luftspalt zwischen dem Feld und Basiswand unterzubringen.

2. Sonnenstrahlung übertragende Isolationsvorrichtung (16) nach Anspruch 1, dadurch gekennzeichnet, daß sich die länglichen Zellen im wesentlichen senkrecht zu der Basiswand erstrecken.

3. Sonnenstrahlung übertragende Isolationsvorrichtung nach Anspruch 1 oder 2, wobei das Feld in einer Ebene angeordnet ist.

4. Sonnenstrahlung übertragende Isolationsvorrichtung nach Anspruch 3, wobei das Feld in einer Ebene parallel zur Tangente der Erdoberfläche an seinem Ort angeordnet ist.

5. Ein Solarteich, welcher umfaßt: eine Menge einer Flüssigkeit, die aufgeheizt werden soll, wobei ihre Oberfläche mit wenigstens einer Sonnenstrahlung übertragenden Isolationsvorrichtung (16) bedeckt ist, wobei die Isolationsvorrichtung ein Feld (50) von Zellen umfaßt, von denen jede eine längliche geometrische Konfiguration aufweist, welche die freie Konvektion dadurch begrenzt, um dadurch Wärmeverluste von der Menge der Flüssigkeit durch Konvektion und Wärmeleitung zu minimieren, und wobei das Feld im wesentlichen transparent für sichtbare und infrarote Sonnenstrahlung und im wesentlichen undurchlässig für thermische Infrarotstrahlung ist, dadurch gekennzeichnet, daß die Isolationsvorrichtung eine Floßanordnung, die dazu vorgesehen ist, auf der Menge der Flüssigkeit zu schwimmen, und eine untere Basiswand (30) umfaßt, welche im wesentlichen transparent für sichtbare und infrarote Sonnenstrahlung und im wesentliche undurchlässig für thermische Infrarotstrahlung ist, und wobei das Feld von Zellen gebildet ist, um in einer gemeinsamen unteren Stirnfläche zu enden, und in der Floßanordnung in solch einer Weise angeordnet ist, daß die gemeinsame untere Stirnfläche im Abstand über der Basiswand angeordnet ist, um so einen Luftspalt zwischen dem Feld und der Basiswand unterzubringen.

6. Ein Solarteich nach Anspruch 5, dadurch gekennzeichnet, daß sich die länglichen Zellen im wesentlichen senkrecht zu der Basiswand erstrecken.

7. Vorrichtung oder Solarteich nach wenigstens einem der Ansprüche 1, 2, 5 oder 6, wobei jede der Zellen in dem Feld von Zellen einen einheitlichen Querschnitt und ein Längen- und Seitenverhältnis aufweist, welches ausgewählt ist, um die freie Konvektion dadurch zu minimieren.

8. Ein Solarteich nach Anspruch 5 oder 6, wobei das Feld von Zellen ein planares Feld umfaßt.

9. Vorrichtung oder Solarteich nach Anspruch 7, wobei das Längen- und Seitenverhältnis im Bereich zwischen ungefähr 5 und ungefähr 50 liegt.

10. Vorrichtung oder Solarteich nach wenigstens einem der Ansprüche 1, 2, 5 oder 6, wobei das Feld von Zellen durch innere und äußere ebene Oberflächen und eine Vielzahl von aufrechten Oberflächen, die sich senkrecht zu den inneren und äußeren Oberflächen erstrecken und Seitenwände der Zellen des Feldes von Zellen bilden, gebildet ist.

11. Vorrichtung oder Solarteich nach Anspruch 10, wobei die aufrechten Oberflächen verbunden sind, um eine Vielzahl von getrennten, abgedichteten Zellen zu bilden.

12. Vorrichtung oder Solarteich nach wenigstens einem der Ansprüche 1, 2, 5 oder 6, wobei die Zellen des Feldes von Zellen so beschaffen sind, daß sie eine Querschnittsform aufweisen, die aus der Quadrate, Kreise und Dreiecke umfassenden Gruppe ausgewählt ist.

13. Vorrichtung oder Solarteich nach wenigstens einem der Ansprüche 1, 2, 5 oder 6, wobei die Zellen des Feldes von Zellen so beschaffen sind, daß sie eine maximale Querschnittsabmessung von etwa 6 mm aufweisen.

14. Vorrichtung oder Solarteich nach wenigstens einem der Ansprüche 1, 2, 5 oder 6, mit einer Flüssigkeit, die in jeder Zelle des Feldes von Zellen angeordnet ist, wobei die Flüssigkeit in der Lage ist, in Reaktion auf thermische Gradienten, die innerhalb jeder Zelle auftreten, zu verdampfen und zu kondensieren, um so für eine Flüssigkeitsbeschichtung auf den Wänden der Zelle zur Erhaltung eines glatten Oberflächenzustandes darauf zu sorgen.

15. Vorrichtung oder Solarteich nach Anspruch 10, wobei die innere Oberfläche Sonnenstrahlung im wesentlichen überträgt.

16. Ein Verfahren zur Herstellung einer Lichtübertragungs-Wärmeisolation mit den Verfahrensschritten:

Extrudieren eines dünn umwandeten Profils, das eine Vielzahl von parallelen Kanälen bildet;

Anordnen einer Vielzahl von dünn umwandeten Profilen in einer Seite-an-Seite-Anordnung; und

Bewirken, daß ein geheiztes Element in die Vielzahl von dünn umwandeten Profilen längs einer Bewegungsachse senkrecht zu der Extrusionsachse eingreift und dadurch die Profile in eine gewünschte Länge schneidet und gleichzeitig miteinander thermisch verschweißt.

**Revendications**

1. Appareil d'isolation (16) perméable au rayonnement solaire pour bassins solaires contenant un corps liquide destiné à être chauffé, ledit appareil d'isolation comprenant un réseau (50) de cellules, chacune ayant une configuration géométrique allongée qui limite la transmission libre à travers elle, ledit réseau étant transparent généralement au rayonnement solaire visible et infrarouge et opaque généralement au rayonnement thermique infrarouge, caractérisé en ce que ledit appareil d'isolation comprend également un ensemble flottant agencé pour flotter sur le corps de liquide et comprenant une paroi de base inférieure (30) qui est transparente généralement au rayonnement solaire visible et infrarouge et opaque généralement au rayonnement thermique infrarouge, et ledit réseau de cellules est formé de manière à se terminer en une face inférieure commune et est disposé dans ledit ensemble flottant de manière que ladite face inférieure commune est espacée au-dessus de ladite paroi de base de manière à former un intervalle d'air entre ledit réseau et ladite paroi de base.

2. Appareil d'isolation (16) perméable au rayonnement solaire selon la revendication 1, caractérisé en ce que lesdites cellules allongées s'étendent généralement perpendiculaires à ladite paroi de base.

3. Appareil d'isolation perméable au rayonnement solaire selon l'une ou l'autre des revendications 1 ou 2, et dans lequel ledit réseau est disposé dans un plan.

4. Appareil d'isolation perméable au rayonnement solaire selon la revendication 3, et dans lequel ledit réseau est disposé selon un plan parallèle à la tangente à la surface de la terre à son emplacement.

5. Un bassin solaire comprenant: un corps liquide destiné à être chauffé, ayant sa surface couverte par au moins un appareil d'isolation (16) perméable au rayonnement solaire, ledit appareil d'isolation comprenant un réseau (50) de cellules, chacune ayant une configuration géométrique allongée qui limite la transmission libre à travers elle, afin de réduire au minimum les pertes de chaleur, depuis le corps de liquide par convection et conduction, ledit réseau étant transparent généralement au rayonnement solaire visible et infrarouge et opaque généralement au rayonnement thermique infrarouge, caractérisé en ce que ledit appareil d'isolation comprend également un ensemble flottant agencé pour flotter sur le corps de liquide et comprenant une paroi de base inférieure (30) qui est transparente généralement au rayonnement solaire visible et infrarouge et opaque généralement au rayonnement thermique infrarouge, et ledit réseau de cellules est formé de manière à se terminer en une face inférieure commune et est disposé dans ledit ensemble flottant de manière que ladite face inférieure commune est espacé au-dessus de ladite paroi de base de manière à former un intervalle d'air entre ledit réseau et ladite paroi de base.

6. Un bassin solaire selon la revendication 5, caractérisé en ce que lesdites cellules allongées s'étendent généralement perpendiculaires à ladite paroi de base.

7. Appareil ou bassin solaire selon l'une quelconque des revendications 1, 2, 5 ou 6, et dans lequel chacune des cellules dans ledit réseau de cellules a une section transversale uniforme et un rapport de la hauteur à la largeur qui est sélectionné pour réduire au minimum la convection libre à travers elle.

8. Un bassin solaire selon l'une ou l'autre des revendications 5 ou 6, et dans lequel ledit réseau de cellules comprend un réseau planaire.

9. Appareil ou bassin solaire selon la revendication 7, et dans lequel ledit rapport de la hauteur à la largeur est entre approximativement 5 et approximativement 50.

10. Appareil ou bassin solaire selon l'une quelconque des revendications 1, 2, 5 ou 6, et dans lequel ledit réseau de cellules est défini par des surfaces planaires intérieure et extérieure et une pluralité de surfaces dressées s'étendant perpendiculairement aux dites surfaces intérieure et extérieure, et définissant les parois latérales de cellules dudit réseau de cellules.

11. Appareil ou bassin solaire selon la revendication 10, et dans lequel lesdites surfaces dressées sont jointes pour définir une pluralité de cellules séparées.

12. Appareil ou bassin solaire selon l'une quelconque des revendications 1, 2, 5 ou 6, et dans lequel les cellules dudit réseau de cellules ont une configuration propre à avoir une forme en coupe transversale sélectionnée dans les groupes comprenant les carrées, les cercles et les triangles.

13. Appareil ou bassin solaire selon l'une quelconque des revendications 1, 2, 5 ou 6, et dans lequel les cellules dudit réseau de cellules ont une configuration propre à avoir une dimension maximale en coupe transversale d'environ 6 mm.

14. Appareil ou bassin solaire selon l'une quelconque des revendications 1, 2, 5 ou 6, et comprenant également un liquide disposé dans chacun desdits réseaux de cellules, ledit liquide étant actif pour s'évaporer et se condenser en réponse à des gradients thermiques présents à l'intérieur de chaque cellule, de manière à former un revêtement liquide pour les parois de ladite cellule afin de préserver un fini de surface lisse dessus.

15. Appareil ou bassin solaire selon la revendication 10, dans lequel ladite surface intérieure est généralement perméable au rayonnement solaire.

16. Un procédé pour produire une isolation thermique perméable à la lumière comprenant les étapes consistant à:

extruder un profilé à paroi mince définissant une pluralité de canaux parallèles;

disposer une pluralité desdits profilés à paroi mince selon une disposition côte à côte,

et faire entrer un élément chauffé en contact avec ladite pluralité de profilés à paroi mince le long d'un axe de déplacement perpendiculaire à l'axe d'extrusion, en coupant ainsi les profilés à une longueur désirée et en les soudant thermiquement les uns aux autres simultanément.

16    16

12

14

18

22

10

20

**Fig 1**

190

192

194

193    **Fig 7**

Fig 2

Fig 3

Fig  4

Fig  5A

117

Fig  5B

117        117

117

Fig  5C

Fig 6